# EUROPEAN PATENT SPECIFICATION

(11) **EP 2 355 409 B1**
(45) Date of publication and mention of the grant of the patent: **27.05.2015**
(21) Application number: 10197357.6
(22) Date of filing: 30.12.2010
(51) Int. Cl.: H04L 12/24, G06F 21/00

(54) **Network management device**
Netzwerkverwaltungsvorrichtung
Dispositif de gestion de réseau

(30) Priority: 03.02.2010 JP 2010022017
(43) Date of publication of application: 10.08.2011
(73) Proprietor: NEC Corporation, Minato-ku Tokyo (JP)
(72) Inventor: Matsuno, Michitaka, Tokyo 108-8001 (JP)
(74) Representative: Betten & Resch

(56) References cited:
- EP-A2- 1 349 318
- US-A1- 2002 135 610
- US-B1- 6 687 832
- US-B1- 7 315 985

## Description

### TECHNICAL FIELD

The present invention relates to a network management device having a function of displaying a network configuration for each layer.

### BACKGROUND ART

A communication network established by a telecommunications carrier in recent years is composed of a plurality of communication layers (may bye simply referred to as layers), Therefore, a network management device performing maintenance and management of the communication network needs a function of displaying a network configuration for each layer.

One example of the network management device having the function of displaying a network configuration of each layer is described in Patent Document 1. The network management device described in Patent Document 1 is used for a communication network in which a PDH-2M transmission system and an SDH-VC12 transmission system are cascaded, and has a function of displaying the network configuration of a PDH-2M layer and the network configuration of an layer by using a CTP (connection terminal point) and a TTP (termination point) that uniquely set the hierarchical relation of layers in standards. text of various communication systems. To be specific, the network management device previously holds PDH-2M layer network information in which a connection relation between the TTP and the CTP of the layed is written and SDH-V12 layer network information in which a connection relation between the TTP and the CTP of the SDH-VC12 is written. Then, in a case that an operator inputs an instruction to display the PDH-2M layer, the network management device displays a PDH-2M layer network configuration diagram based on the PDH-2M layer network information. Moreover, in a case that the operator inputs an instruction to display the SDH-V12 layer, the network management device displays an SDH-V12 layer network configuration diagram based on the SDH-V12 layer network information.
[Patent document 1] JP H11-74937 A

The configuration of displaying a network configuration diagram of each layer by using information in which a connection relation between a TTP and a CTP is written increases the amount of processing for displaying an upper layer and makes it difficult to speedily display, in a communication network hierarchized into a plurality of layers such as WDM (a lightwave layer), L1 (a first layer of OSI reference model), L2 (a second layer of OSI reference model) and L3 (a third layer of OSI reference model), except in a communication network in which a PDH-2M transmission system and an SDH-V12 transmission system are cascaded.

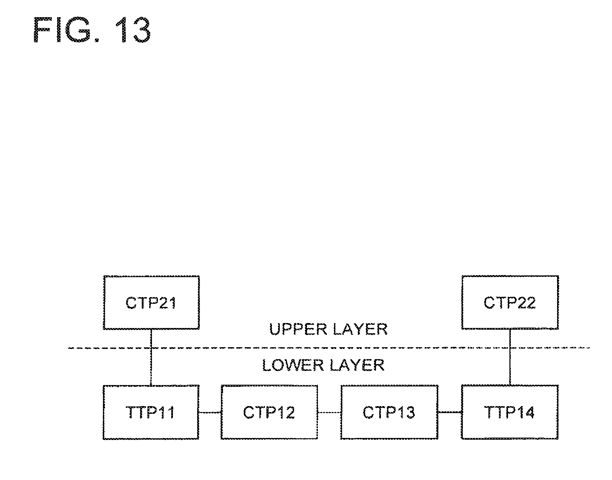

This is because, when displaying the network configuration diagram of an upper layer, there is a need to trace an association of TTPs and CTPs between the upper layer and a lower layer and a connection relation between the TTP and the CTP in the lower layer and grasp a logical connection relation between the TTP and the CTP in the upper layer. For example, it is assumed that, as shown in Fig. 13, a lower layer includes a TTP H, a CTP 12, a CTP 13 and a TTP 14 and an upper layer includes a CTP 21 and a CTP 22. Moreover, it shall be defined that the TTP 11 and the CTP 12 are connected, the CTP 12 and the CTP 13 are connected and the CTP 13 and the TTP 14 are connected in the lower layer, the TFP 11 of the lower layer is associated with the CTP 21 of the upper layer, and the TTP 14 of the lower layer is associated with the CTP 22 of the upper layer. In this case, when displaying the network configuration diagram of the upper layer, there is a need to trace that the CTP 21 is associated with the TTP 11 I of the lower layer, the TTP 11 of the lower layer is connected to the TTP 14 via the CTP 12 and the CTP 13, and the TTP 14 is associated with the CTP 22 of the upper layer, and grasp that the CTP 21 and the CTP 22 are logically connected.

Document US2002135610A1 discloses a system and method for visualizing multi-layer topology schematics from topology data, enabling view level (layer) change to an alternative view level (layer) by selecting a partial domain on the schematic displayed on the screen. The system may include: view level tables corresponding to all partial domains set in accordance with the arrangement of components in a topology schematic space, wherein each component to be visualized within a partial domain and the view levels of the components are defined. In response to an input whereby a partial domain and a specific view level to which the currently visualized schematic is to change have been selected, the system determines one or more components belonging to the selected view level from the view table for the specified partial domain and visualizes the component(s) within the selected domain.

Document US6687832B1 discloses a system for controlling topology views for operators in network management which includes a data-storage unit storing data of a base topology view, a security-management unit controlling access-authorization information with respect to each of the operators, the access-authorization information for a given operator defining network elements accessible by the given operator, and a topology-view-management unit generating data of a dependent topology view by making a partial copy of the data of the base topology view only with respect to the network elements accessible by the given operator, thereby providing the dependent topology view to be presented to the given operator.

### SUMMARY

An object of the present invention is to provide a network management device that solves a problem as described above, that is, a problem that the amount of processing for displaying the network configuration diagram of an upper layer increases and speedy display becomes difficult.

The present invention is defined in the independent claims. The dependent claims define advantageous embodiments thereof.

Since the present invention provides a configuration as defined in said claims, the amount of processing for' displaying the network configuration diagram of an upper layer is reduced and speedy display is enabled.

### BRIEF DESCRIPTION OF THE DRAWINGS

Fig. 1 is a block diagram of a second embodiment of the present invention
Fig. 2 is a view showing a configuration example of network configuration data used in the second embodiment of the present invention;
Fig. 3 is a view showing a configuration example of filtering information used in the second embodiment of the present invention;
Fig, 4 is a view showing an example of the architecture of a multilayer communication network to be managed in the second embodiment of the present invention;
Fig. 5 is a view of sequences on the client side and the server side at the time of login by an operator in the second embodiment of the present invention;
Fig. 6 is a sequence view showing the details of a process corresponding to the content of an operation on the client side in the second embodiment of the present invention;
Fig. 7 is a display example of a network configuration diagram for each layer in the second embodiment of the present invention;
Fig. 8 is a block diagram of a third embodiment of the present invention;
Fig. 9 is a block diagram of a fourth embodiment of the present invention;
Fig. 10 is a diagram showing a configuration to perform management of respective layers with separate network management systems;
Fig. 11 is a diagram showing a configuration to perform management of multiple layers with one network management system;
Fig. 12 is a block diagram of a first embodiment of the present invention; and
Fig. 13 is an explanation view of a problem of a technique relating to the present invention.

### EXEMPLARY EMBODIMENT

Next, an embodiment of the present invention will be described in detail with reference to the drawings.

### [First Exemplary Embodiment]

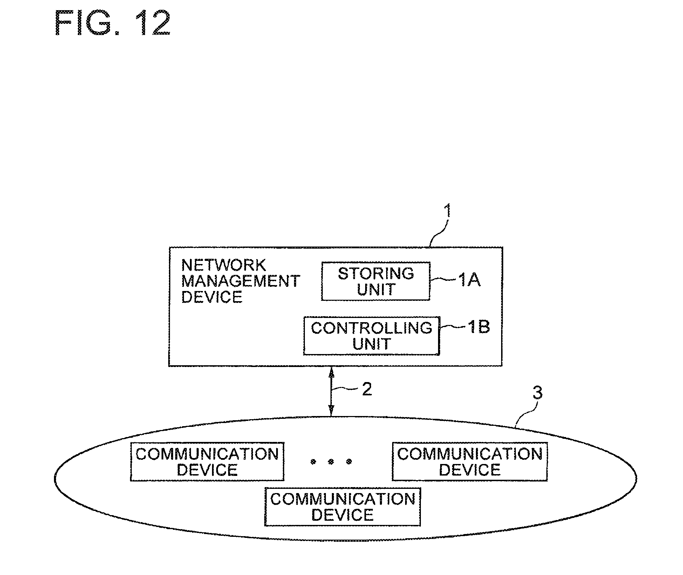

With reference to Fig. 12, a network management device I according to a first embodiment of the present invention is connected to a multilayer communication network 3 by a line 2, and is used for maintenance and management of the communication network 3.

The network management device 1 has a function of, by communicating with a plurality of communication devices forming the communication network 3 via the line 2, monitoring and collecting the statuses and so on of the respective communication devices and providing the respective communication devices with various kinds of settings. Moreover, this network management device 1 has a storing unit 1A and a controlling unit 1B in order to display a network configuration for each layer of the communication network 3.

In the storing unit 1A, network configuration data is stored. This network configuration data includes a device position information table and a section position information table. The device position information table stores, for each combination of a communication device constituting a network and a layer to which the communication device belongs, an entry (a record) formed by a group including a device identifier as identification information of the communication device, display coordinate values of an icon in the layer of the communication device, and a layer value representing the layer to which the communication device belongs. Moreover, the section position information table stores, for each section as a logical connection in the same layer between the communication devices, an entry (a record) formed by a group including a section identifier as identification information of the section, display coordinate values of both end points of a line segment representing the section, and a layer value representing the layer to which the section belongs.

The controlling unit 1B extracts an entry including a layer value designated by an operator from the network configuration data including the device position information table and the section position information table, and displays a network configuration diagram in accordance with the display coordinate values of the icon and the display coordinate values of both the end points of the line segment in the extracted entry.

Further, the network configuration data stored in the storing unit 1A may further include a device object table that stores an entry formed by a combination of a device identifier and an attribute for each communication device, and a section object table that stores an entry formed by a combination of a section identifier and an attribute for each section. In this case, the controlling unit 1B may be configured to, in a case that an icon of a communication device or a line segment representing a section on the network configuration diagram is clicked with a mouse, acquire the attribute of the communication device or the attribute of the section of the corresponding layer from the device object table or the section object table, and display on a screen.

Thus, according to the present invention, the network configuration of each layer is stored in the form of data, focusing on a device and a section instead of end points such as a TTP and a CTP whose inclusion relation of model management is set in standards text, with the result that the amount of processing for displaying the network configuration diagram of an upper layer is reduced and speedy display is enabled,

### [Second Exemplary Embodiment]

### <Description of Configuration>

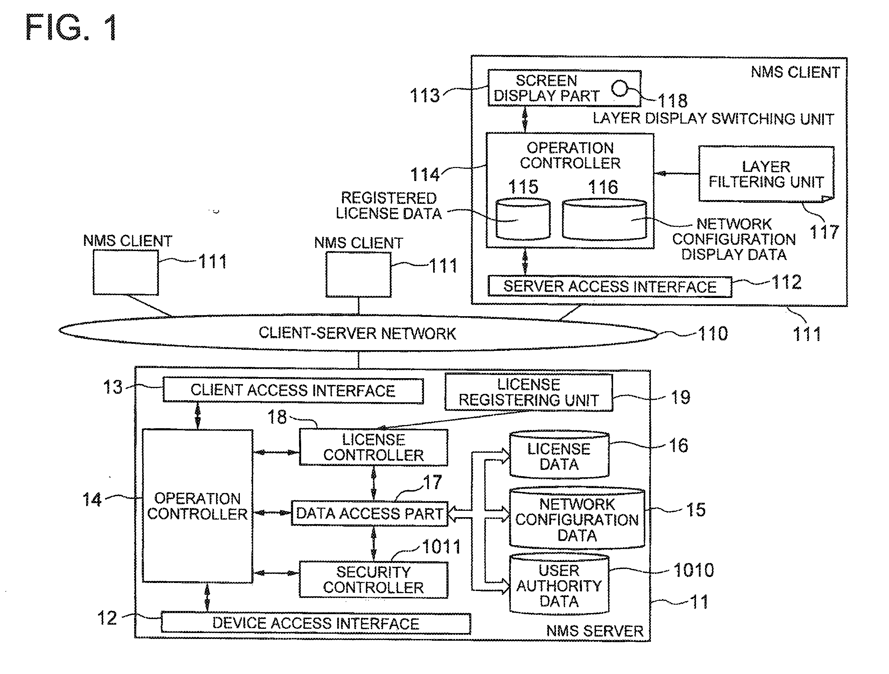

Next, a second embodiment of the present invention will be described. Fig. 1 is a block diagram of a network management system (NMS) according to the second embodiment of the present invention. In this embodiment, the NMS has general client-server architecture and therefore includes, as components, an NMS server 11, an NMS client 111, and a client-server network 110 that connects the client and the server.

The NMS server 11 includes: a device access interface 12 that is responsible for a communication interface with a communication device constituting a communication network to be managed; a client access interface 13 that is responsible for a communication interface with the NMS client; an operation controller 14 that controls the operation of a server application; a license controller 18 that is responsible for control of license and so on; a data access part 17 that controls writing in and reading out of various kinds of data held by the NMS; a security controller 1011 that is responsible for control relating to user authority of an operator; network configuration data 15 that holds network configuration information established through an operation by an end user; license data 16 that holds license information registered in the system; user authority data 1010 that holds information of an accessible layer for each operator; and a license registering unit 19 for performing registration of license into the system. The license data 16, the network configuration data 15, and the user authority data 1010 are stored in a storing device such as a hard disk and a memory.

The NMS client 111 is an operation terminal for the operator. A plurality of NMS clients 111 can access the NMS server 11. The NMS client 111 includes: a server access interface 112 that is responsible for a communication interface with the NMS server; a screen display part 113 for causing a display device such as a LCD to display a screen for the operator; an operation controller 114 that controls the operation of a client application; registered license data 115 held by a memory in the operation controller 114; network configuration display data 116; and a layer filtering unit 117 that has information for filtering control of network configuration information displayed by the screen display part 113, based on a layer. Moreover, the screen display part 113 has a layer display switching unit 118 for switching layers of the network configuration to be displayed on the screen.

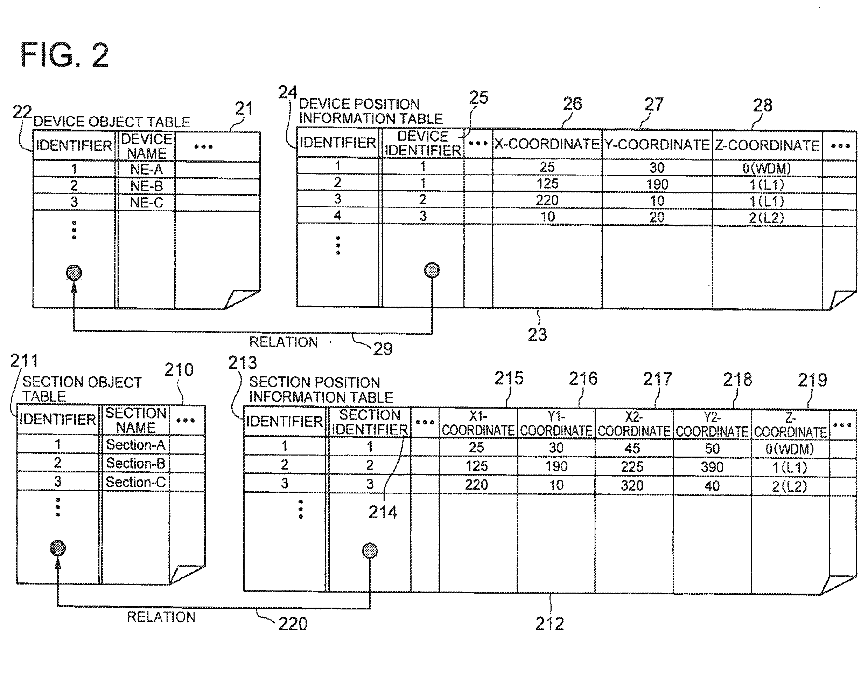

The network configuration data 15 of the NMS server 11 includes data as shown in Fig. 2. The data shown in Fig. 2 is data on a network configuration diagram displayed by the screen display part 113 of the NMS client 111. The data shown in Fig. 2 includes a device object table 21 that holds attribute information of a communication data, a device position information table 23 that holds, for each device object, information of a display position and information of a layer on the screen display part 113 of the NMS client 111, a section object table 210 that holds attribute information relating to a physical connection between devices or a logical connection between devices in the same layer, and a section position information table 212 that holds information of the display position and information of the layer on the screen display part 113 of the NMS client 111.

The device object table 21 holds an identifier 22 that uniquely identifies each communication device in the table, and an attribute relating to a communication device such as the name of the device and a communication address. The device position information display table 23 holds an identifier 24 that uniquely identifies each device position information in the table, a device identifier 25 that represents a device object corresponding to the position information, an X-coordinate 26 that represents a display coordinate position of the vertical direction on the client screen, a Y-coordmate 27 that represents a display coordinate position of the horizontal direction on the client screen, and a Z-coordinate 28 that represents a layer to which the device belongs. Moreover, the device identifier 25 holds a relation 29 with the identifier 22 of the device object table 21. A communication device does not necessarily process one layer of a communication protocol. One communication device may process a plurality of layers. Therefore, as shown in the example of Fig. 2, it is possible to assign a plurality of records of the device position information table 23 to one communication device (for example, a communication device specified by the identifier 22 "1" of the device object table 21). The value of the Z-coordinate 28 of each of the records assigned to the one communication device is set to a value representing a different layer for each record. Moreover, the value of the X-coordinate 26 and the value of the Y-coordinate 27 of each of the records assigned to the one communication device may be set to different values for each record. Consequently, depending on layers processed by a communication device, different icons are assigned to the communication device and displayed.

The section object table 210 holds an identifier 2.11 that uniquely identifies each connection relation between the devices in the table, and an attribute relating to a section such as the name of a section and a communication band. The section position information display table 212 holds an identifier 213 that uniquely identifies each section position information in the table, a section identifier 214 that represents a section object corresponding to the position information, an X1-coordinate 215 and an X2-coordinate 217 that represent display coordinate positions in the vertical direction on the client screen of two points forming the section, a Y1-coordinate 216 and a Y2-coordinate 218 that represent display coordinate positions in the horizontal direction on the client screen of the two points, and a Z-coordinate 219 that represents a layer to which the section belongs. Moreover, the section identifier 214 holds a relation 220 with the identifier 211 1 of the section object table 210.

The user authority data 1010 of the NMS server 11 holds management information of the attribute of the operator and the group to which the operator belongs. The user authority data 1010 of the NMS server 11 holds information of a layer that can be operated by each operator, in association with numerical values assigned to the Z-coordinate 28 of the device position information table 23 and the Z-coordinate 219 of the section position information table 212. The data setting of the user authority data 1010 is performed by an operator having administrator authority, by using a user registration function generally provided on the screen display part 113 of the NMS client 111. The user authority data sent out from the NMS client 11 is registered into the user authority data 1010 via the operation controller 114, the server access interface 112, the client-server network 110, the client access interface 13 the operation controller 14, the security controller 1011, and the data access part 17. User authority data is registered before steady operation of the system is started. The layer information held in the user authority data 1010 to be registered is selected by the operator from the layer information registered in the license data 16 in advance.

The license data, 16 is data on license for each layer purchased for a network operation by a telecommunications carrier. This license data 16 is inputted through the license registering unit 16 and, under the control by the license controller 18, stored into the storing part through the data access part 17.

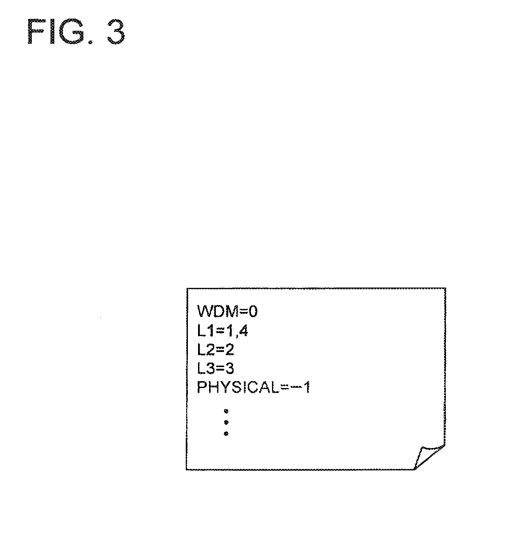

The layer filtering unit 117 of the NMS client 111 has filtering information that makes it possible to switch, for each layer, network configuration information displayed by the screen display part 113. Fig. 3 shows a configuration example of the filtering information. The filtering information has a format "left side equals right side." On the left side, layer information is written. On the right side, a fixed numerical value representing a layer designated by the Z-coordinate 28 of the device position information table 23 and the Z-coordinate 219 of the section position information table 212 is written. When the layer on the left side of the filtering information is selected by the operator on the screen display part 113, it is possible to use the value on the right side of the filtering information as the origin of the filtering information of the network configuration information to be displayed. Consequently, also for a new technique such as PWE (pseudo wire emulation) of a packet transport network, only by setting L1 = 1, 4 to designate a new fixed value 4 corresponding to PWE, it is possible to perform filtering of the L1. layer, and it is possible to define a new layer as PWE =4 and display network configuration information thereof.

Further, the network configuration display data 116 of the NMS client 111 is obtained by, for each client, extracting information necessary for specification of an object and information necessary for position display on the screen, from the network configuration data 15 of the NMS server 11 (this network configuration data 15 includes data of combination of the device object table 21 and the device position information table 23, and data of combination of the section object table 210 and the section position information display table 212).

### <Description of Operation>

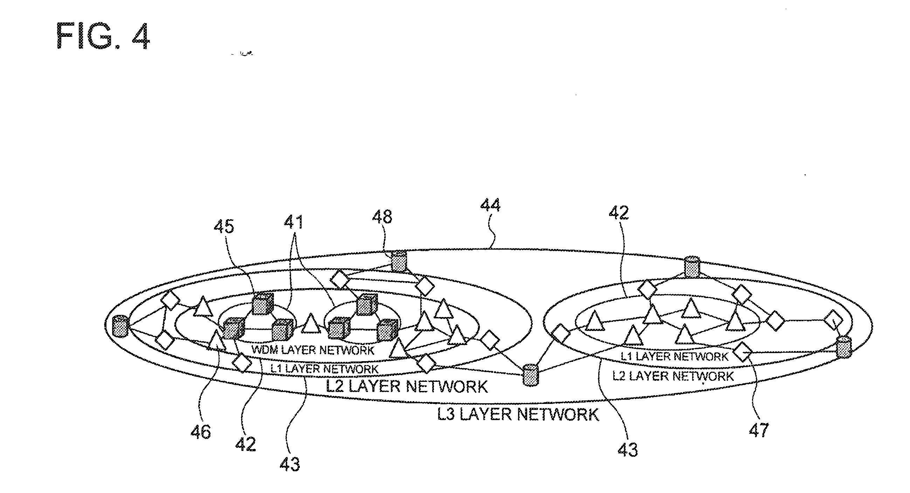

It is assumed that the network configuration data 15 of the NMS server 11 previously holds a network configuration as shown in Fig. 4 in a data format as shown in Fig. 2. The network configuration shown in Fig. 4 is an example made for describing an operation of the present invention. The network configuration shown in Fig. 4 includes: communication devices of respective layers of a WDM layer network 41 configured by WDM layer communication devices 45, an L1 layer network 42 configured by L1 layer communication devices 46, an L2 layer network 43 configured by L2 layer communication devices 47, and an L3 layer network 44 configured by L3 layer communication devices 48; and logical networks of the respective layers configured by the communication devices.

Further, it is assumed that, before steady operation of the system is started, the NMS server 11 receives license for each layer having been purchased by a telecommunications carrier for a network operation through the license registering unit 19. License is given for each layer of WDM, L1, L2, L3, .... The NMS server 11 receives license for only a layer used for a network operation. The information of the license is inputted through the license registering unit 19, and received by the license controller 18. The license controller 18 checks the received information of the license and, if there is no problem, registers as the license data 16 via the data access part 17.

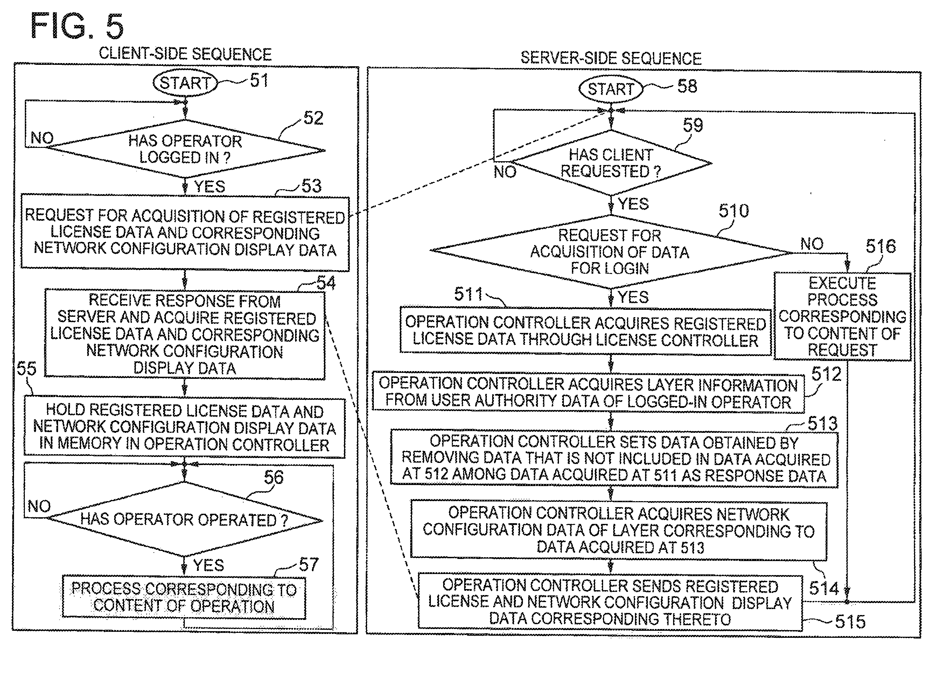

On the aforementioned presumption, a sequence when the operator logs in the NMS client 111 will be described with reference to Fig. 5. When started (step 51), the NMS client 111 I is brought into a waiting state for operator login (step 52). When the operator logs in, the operation controller 114 sends a request for acquisition of license data having been registered and network configuration display data corresponding to the registered license data and to the user authority data of the logged-in operator, to the NMS server 11 via the server access interface 112 (step 53). This acquisition request includes an identifier that uniquely identifies the NMS client 111 and an identifier that uniquely identifies the logged-in operator.

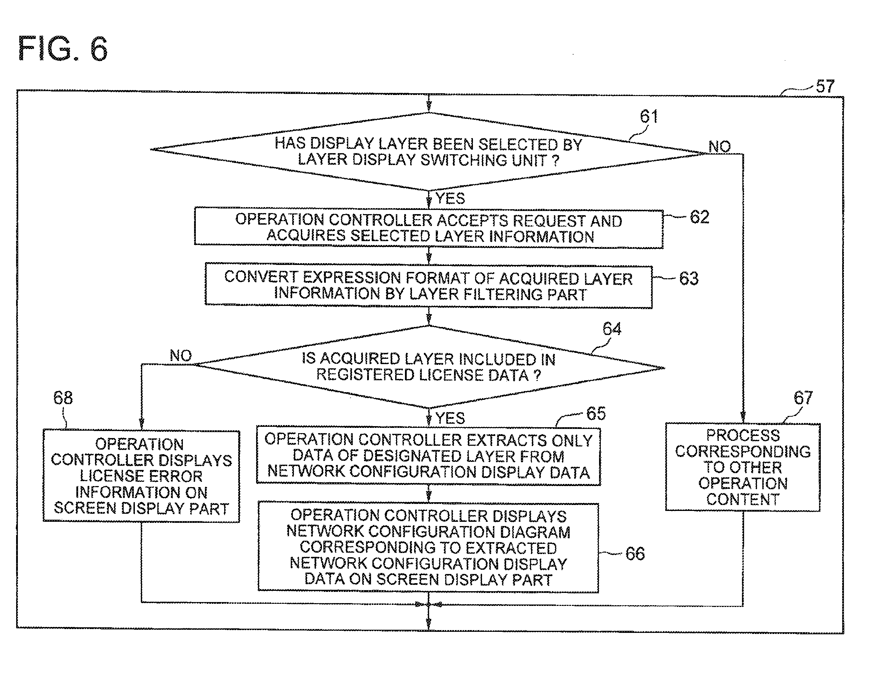

After that, the operation controller 114 of the NMS client 111 receives response data from the NMS server 11 via the server access interface 112 (step 54). Next, the operation controller 114 stores the registered license data 115 and the network configuration display data 116 that are included in the response data, into the memory of the operation controller 114 (step 55). After that, the NMS client 111 is brought into a waiting state for an operation by the logged-in operator (step 56). When the operator operates, the NMS client 111 executes a process corresponding to the content of the operation (step 57), and thereafter, is again brought into a waiting state for an operation by the operator (step 56). Among processes corresponding to the contents of operations, a process relating to the present invention will be described in detail later with reference to Fig. 6. In the process of logging in the NMS client 111 by the operator, general password authentication is used for authentication of the operator.

When started (step 58), the NMS server 11 is brought into a waiting state for a request from the NMS client 111 (step 59). Upon receipt of a request from the NMS client 111 via the client access interface 13, the operation controller 14 of the NMS server 11 determines whether the request is a request for acquisition of registered license data and network configuration display data corresponding thereto for login (step 510). In the case of this request, the operation controller 14 sends a request for acquisition of the registered license data to the license controller 18 (step 511). The license controller 18 reads out the registered license data 16 via the data access part 17, and sends a response to the operation controller 14.

Next, the operation controller 14 reads out user authority data corresponding to the logged-in operator from the user authority data 1010 via the security controller 1011, and moreover, acquires information of a layer that the operator is allowed to operate, which is included in the user authority data (step 512). Next, the operation controller 14 removes license data for a layer that is not included in the information acquired at step 512, from the license data 16 obtained at step 511, and lets license data after removal be the registered license data to respond to the client (step 513).

Next, the operation controller 14 acquires only network configuration data of the layer that the user is authorized based on the license data obtained at step 513, from the network configuration data 15 via the data access part 17 (step 514). The network configuration data 15 holds layer information of each record as the Z-coordinate 28 of the device position information table 23 and the Z-coordinate 219 of the section position information table 212 of Fig. 2. The operation controller 14 acquires records of the device position information table 23 and the section position information table 212 in which information of the layer that the user is authorized is recorded in the Z-coordinate 28 and the Z-coordinate 219 at step 513.

After that, the operation controller 14 transmits the acquired license data and the acquired network configuration data as network configuration display data, to the NMS client 111 via the client access interface 13 (step 515), and thereafter, is brought into a waiting state for a request from the NMS client 111 (step 59).

Further, in a case that a request from the NMS client 111 is not a request for acquiring data for login (step 510), the NMS server 11 executes a process corresponding to the content of the request (step 516). The process of step 516 will not be described in detail because it is not a process directly related to the present invention.

Next, a sequence when the logged-in operator selects any layer on the screen display part 113 of the NMS client 111 to display network configuration display information corresponding to the layer will be described with reference to Fig. 6. Fig. 6 shows a detailed sequence of the process at step 57, which is a process corresponding to the content of an operation in the client-side sequence shown in Fig. 5.

When the operator of the NMS client 111 selects a layer of network configuration display information to be displayed on the screen by using the layer display switching unit 118 of the screen display part 113 (step 61), the operation controller 114 receives the request and acquires information of the selected layer (step 62). Subsequently, the operation controller 114 converts the information of the layer selected by the operator into a layer expression format (numerical information) within the network configuration display data (step 63).

Furthermore, the operation controller 114 confirms that the layer selected by the operator is included in the registered license data 115 (step 64) and, if there is no problem, extracts only data of the layer selected by the operator from the network configuration display data 116 (step 65). In the network configuration display data 116, the Z-coordinate 28 of the device position information table 23 and the Z-coordinate. 219 of the section position information table 212 of Fig. 2 hold layer data. In the process of step 65, the operation controller 114 acquires records of the device position information table 23 and the section position information table 212 in which information of the layer selected by the operator is recorded in the Z-coordinate 28 and the Z-coordinate 219 at step 65.

Finally, the operation controller 114 displays a network configuration diagram on the screen display part 113 based on the extracted network configuration display data (step 66). To be specific, the operation controller 114, for each entry of the device position information table included in the extracted network configuration display data, displays an icon corresponding to a communication device specified by the device identifier 25 in the entry at display coordinate values determined by the X-coordinate 26 and the Y-coordinate 27 in the entry. Moreover, the operation controller 114, for each entry of the section position information table included in the extracted network configuration display data, draws a line segment corresponding to a section specified by the section identifier 214 in the entry. The start point of the line segment to be drawn is a position determined by the X1-coordinate and the Y1-coordinate in the entry and the end point of the line segment is a position determined by the X2-coordinate and the Y2-coordinate in the entry.

In a case that an operation designated by the operator is other than selection of a display layer by the layer display switching unit 118 (step 61), another process is executed in accordance with the content of the operation (step 67). In step 67, for example, in a case that an icon representing a communication device and a line segment representing a section in a displayed network configuration diagram are clicked by mouse, a process such as reading out the attributes thereof from the device object table and the section object table and displaying is executed. However, the process of step 67 will not be described in detail because it is not related to the present invention directly. Moreover, in a case that the information of the layer designated by the operator is not included in the registered license data (step 64), the operation controller 64 displays license error information on the screen display part 113 (step 68).

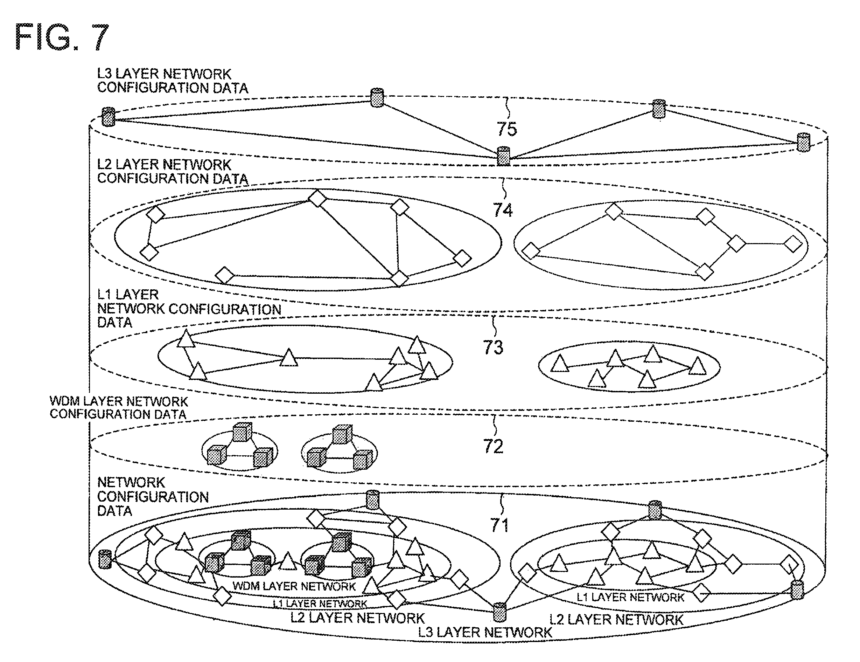

Fig. 7 shows a display image of a network configuration diagram of the respective layers displayed based on the network configuration data 71 shown in Fig. 4. The original network configuration data 71 shown in Fig. 4 represents an actual physical connection relation of the devices, whereas the network configuration diagram of the respective layers shown in Fig. 7 shows a logical connection relation of the devices in the respective layers,

In a case that the WDM layer is selected by the layer display switching unit 118, the operation controller 114 extracts data relating to the WDM layer from the network configuration display data 116 and, based on the extracted data, displays a network configuration diagram corresponding to WDM layer network configuration data 72 as shown in Fig. 7 on the screen display part 113.

Further, in a case that the L1 layer is selected by the layer display switching unit 118, the operation controller 114 extracts data relating to the L1 layer from the network configuration data 116 and, based on this extracted data, displays a network configuration diagram corresponding to L1 layer network configuration data 73 as shown in Fig. 7 on the screen display part 113.

Further, in a case that the L2 layer is selected by the layer display switching unit 118, the operation controller 114 extracts data relating to the L2 layer from the network configuration data 116 and, based on this extracted data, displays a network configuration diagram corresponding to the L2 layer network configuration data 74 as shown in Fig. 7 on the screen display part 113.

Further, in a case that the L3 layer is selected by the layer display switching unit 118, the operation controller 114 extracts data relating to the L3 layer from the network configuration data 116 and, based on this extracted data, displays a network configuration diagram corresponding to the L3 layer network configuration data 75 as shown in Fig. 7 on the screen display part 113.

In Fig. 7, line segments represent sections, and icons such as squares and triangles represent communication devices. It is defined in advance by each client what kind of line segment and icon are used.

### <Description of Effects>

As described above, this embodiment produces the following effects.

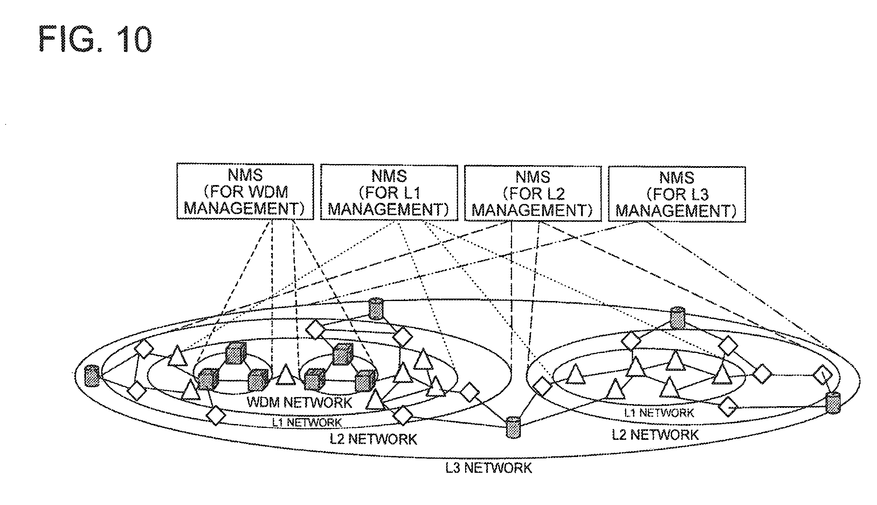

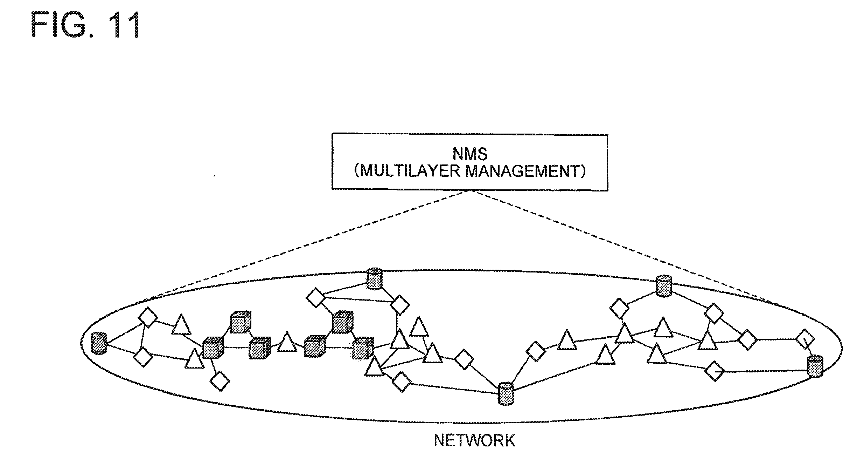

A first effect is that, since network configuration data expanding on multiple layers is stored in a data format that allows expression for each layer, it is possible to speedily switch between logical network display and physical network display of a communication layer required by the operator by using the layer display switching unit of the screen display part of the NMS client. Accordingly, it becomes possible to integrate network management systems provided for the respective layers as shown in Fig. 10 in old systems, and perform network management expanding on multiple layers with one system as shown in Fig. 11. In this case, advanced functions such as design of a logical network for each layer, as well as fault administration, may be given.

A second effect is that, by making information of an operable layer held in association for each operator as user authority data, it is possible, in an integral network management system that manages multiple layers as shown in Fig. 11, to mange only a specific layer in a like manner as in the monitoring system of Fig. 10 for each operator. For example, in the case of Fig. 10, an operator performing network management of the L1 layer may select the L1 layer by the layer switching unit 18 and perform an operation, and an operator performing network management of the WDM layer may select the WDM layer by the layer switching unit 18 and perform an operation. Besides, since it is also possible to integrally manage the multiple layers as described in the first effect, it becomes possible to migrate from the management method for each layer to the management method for multiple layers.

A third effect is that, since a data format that allows expression of network configuration data expanding on multiple layers for the respective layers is given and mechanism for licensing for each layer such as a license controller and a license registering unit are also given, it is possible to, for a network management system capable of integrally managing multiple layers, control whether to provide a management function for the respective layers and charge to a telecommunication carrier.

A fourth effect is that, since a layer filtering unit with a simple data hold format makes it possible to freely define a new layer expression, it is possible to display network configuration data on the screen display part for a new layer without changing the source code of the system. For example, by executing change of data of the existing L1 layer by the layer filtering unit on a pseudo network of an L1 layer provided by PWE (Pseudo Wire Emulation), which is a new packet transport communication technique, it is possible to integrally display both the data on the screen display part.

### [Other Exemplary Embodiment]

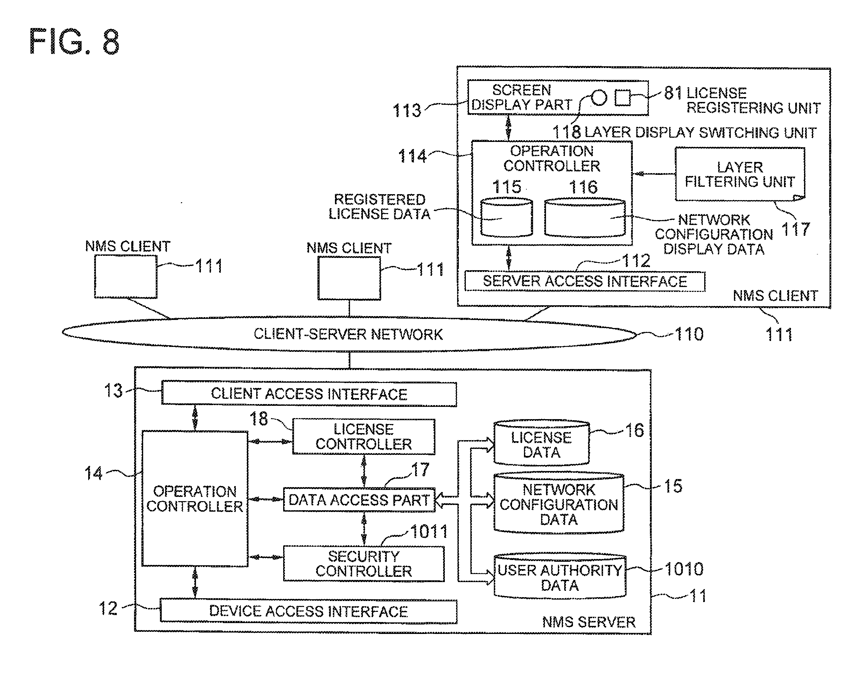

A module configuration of the NMS server 11 and the NMS client 111 of the present invention is not limited to arrangement shown in Fig. 1. For example, in an example shown in Fig. 8, the license registering unit 19 is not placed in the NMS server 11 and is newly placed in the NMS client 111 as a license registering unit 81. The other configuration is not changed from the configuration of Fig. 1 at all. An embodiment shown by Fig. 8 produces an effect that it is possible to execute a function of license registration on the client side, but the other operation is not changed.

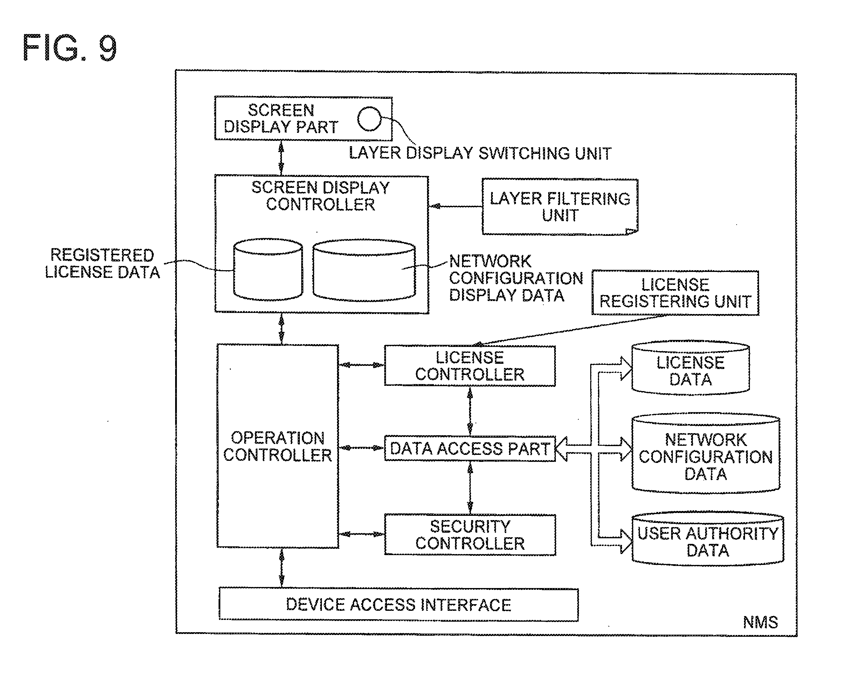

Further, Fig. 9 shows an embodiment in which an NMS server and an NMS client are integrated and realized on one machine. In this embodiment, there is no special change except that access interfaces between the client and the server are eliminated, and the operation is almost similar.

### (Supplementary Note 1)

A computer program product comprising computer implementable instructions for causing a computer to function as an operation controlling unit,
the computer including a storing unit configured to store network configuration data, the network configuration data including:
a device position information table configured to, for each combination of a communication device constituting a network and a layer to which the communication device belongs, store an entry formed by a group including a device identifier as identification information of the communication device, display coordinate values of an icon of the communication device in the layer, and a layer value representing the layer to which the communication device belongs; and
a section position information table configured to, for each section as a logical connection in a same layer between the communication devices, store an entry formed by a group including a section identifier as identification information of the section, display coordinate values of both end points of a line segment representing the section, and a layer value representing the layer to which the section belongs,
the operation controlling unit being configured to extract an entry including a specific layer value from the network configuration data, and display a network configuration diagram in accordance with display coordinate values of the icon and display coordinate values of both ends points of the line segment in the extracted entry.

## Claims

1. A network management device (1), comprising:
a storing unit (1A) configured to store network configuration data and a controlling unit (1B),
wherein the network configuration data (15) stored by the storing unit includes:
a device position information table (23) configured to, for each combination of a communication device constituting a network and a layer to which the communication device belongs, store an entry formed by a group including a device identifier (25) as identification information of the communication device, display coordinate values (26. 27) of an icon of the communication device in the layer, and a layer value (28) representing the layer to which the communication device belongs; and
a section position information table (212) configured to, for each section as a logical connection in a same layer between the communication devices, store an entry formed by a group including a section identifier (214) as identification information of the section, display coordinate values (215, 216, 217, 218) of both end points of a line segment representing the section, and a layer value (219) representing the layer to which the section belongs, and
wherein the controlling unit is configured to extract the entry including a specific layer value from each of the device position information table and the section position information table of the network configuration data, and display a network configuration diagram in accordance with the display coordinate values (26, 27) of the icon in the entry extracted from the device position information table (23) and the display coordinate values (215, 216, 217, 218) of both the end points of the line segment in the entry extracted from the section position information table (212).

2. The network management device (1) according to claim 1, wherein the network configuration data (15) further includes: a device object table configured to store an entry formed by a group including the device identifier and an attribute, for the each communication device; and a section object table (210) configured to store an entry formed by a group including the section identifier and an attribute, for the each section.

3. The network management device (1) according to claim 1 or 2, comprising a layer filtering unit (117) configured to convert a display layer designated by an operator into the layer value (28) in accordance with a previously defined conversion rule.

4. The network management device (1) according to any of claims 1 to 3, wherein the controlling unit (1B) is configured to determine whether to display the network configuration diagram according to the specific layer value, based on license data (16) that sets a displayable layer for each client.

5. The network management device (1) according to any of claims 1 to 4, wherein the controlling unit (1B) is configured to determine whether to display the network configuration diagram according to the specific layer value, based on user authority data (1010) that sets a displayable layer for each operator or operator group.

6. A network configuration diagram displaying method executed by a network management device,
wherein the network management device (1) includes:
a storing unit (1A) configured to store network configuration data (15) and a controlling unit (1B), and
wherein the network configuration data (15) includes:
a device position information table (23) configured to, for each combination of a communication device constituting a network and a layer to which the communication device belongs, store an entry formed by a group including a device identifier (25) as identification information of the communication device, display coordinate values (26, 27 of an icon of the communication device in the layer, and a layer value (28) representing the layer to which the communication device belongs; and
a section position information table (212) configured to, for each section as a logical connection in a same layer between the communication devices, store an entry formed by a group including a section identifier (214) as identification information of the section, display coordinate values (215, 216, 217, 218) of both end points of a line segment representing the section, and a layer value (219) representing the layer to which the section belongs,
the network configuration diagram displaying method comprising:
extracting an entry including a specific layer value from each of the device position information table (23) and the section position information table (212) of the network configuration data, and displaying a network configuration diagram in accordance with the display coordinate values (26. 27) of the icon in the entry extracted from the device position information table and the display coordinate values (215, 216, 217. 218) of both the end points of the line segment in the entry extracted from the section position information table, by the controlling unit.

7. A network management system comprising a server device (11) and a client device (111) capable of communicating with each other,
wherein the server device includes:
a network configuration data (15) storing unit configured to store network configuration data:
a client data storing unit configured to store license data (16) of each layer that sets a displayable layer for each client:
a user authority data storing unit configured to store user authority data (1010) that sets a displayable laver for each operator or operator group; and
an operation controlling unit (14),
wherein the network configuration data stored by the network configuration data storing unit includes:
a device position information table (23) configured to, for each combination of a communication device constituting a network and a layer to which the communication device belongs, store an entry formed by a group including a device identifier (25) as identification information of the communication device, display coordinate values (26, 27) of an icon of the communication device in the layer, and a layer value (28) representing the layer to which the communication device belongs; and
a section position information table (212) configured to, for each section as a logical connection in a same layer between the communication devices, store an entry formed by a group including a section identifier (214) as identification information of the section, display coordinate values (215, 216, 217, 218) of both end points of a line segment representing the section, and a layer value (219) representing the layer to which the section belongs,
wherein, when an operator of the client device logs in, the operation controlling unit (14) selects license data (16) of each layer other than a layer that cannot be displayed with the user authority data (1010) corresponding to the operator from among the license data of each layer corresponding to the client device (111) and sends the selected license data of each layer as registered license data (115) of each layer to the client device, and also selects entries halving a same layer value as a layer that can be displayed with the registered license data from among the entries of the device position information table (23) and the section position information table (212) of the network configuration data (15) and sends network configuration display data (116) configured by the selected entries to the client device, and
wherein the client device (111) includes:
a storing device; and
an operation controlling unit (114) configured to: store the registered licence data (115) and the network configuration display data (116) received from the server device (11) into the storing device; and when a layer to be displayed is selected by the operator, determine whether license data of the selected layer exists in the registered license data stored by the storing device and, in a case that the license data of the selected layer exists, extract an entry including a layer value (28) corresponding to the layer to be displayed from along the entries of the device position information table (23) and the section position information table (212) configuring the network configuration display data stored by the storing device, and display a network configuration diagram in accordance with the display coordinate values (26, 27) of the icon in the entry extracted from the device position information table and the display coordinate values (215, 216, 217, 218) of both the end points of the line segment in the entry extracted from the section position information table.

8. A server device, comprising:
a network configuration data storing unit (1A) configured to store network configuration data (15);
a client data storing unit configured to store license data (16) that sets a displayable layer for each client;
a user authority data storing unit configured to store user authority data (1010) that sets a displayable layer for each operator or operator group; and
an operation controlling unit (14),
wherein the network configuration data stored by the network configuration data storing unit includes:
a device position information table (23) configured to, for each combination of a communication device constituting a network and a layer to which the communication device belongs, store an entry formed by a group including a device identifier (25) as identification information of the communication device, display coordinate values (26, 27 of an icon of the communication device in the layer, and a layer value (28) representing the layer to which the communication device belongs; and
a section position information table (212) configured to, for each section as a logical connection in a same layer between the communication devices, store an entry formed by a group including a section identifier (214) as identification information of the section, display coordinate values (215, 216, 217, 218) of both end points of a line segment representing the section, and a layer value (219) representing the layer to which the section belongs, and
wherein when an operator of the client device logs in the operation controlling unit (14) selects license data (16) of each layer other than a layer that cannot be displayed with the user authority data (1010) corresponding to the operator from among the license data of each layer corresponding to the client device and sends the selected license data of each layer as registered license data of each layer to the client device, and also selects entries having a same layer value as a layer that can be displayed with the registered license data from among the entries of the device position information table (23) and the section position information table (212) of the network configuration data (15) and sends network configuration display data configured by the selected entries to the client device.

9. A computer program product comprising computer implementable instructions for causing a programmable computer device to perform all steps of the method of claim 6 when the computer program is run on the programmable computer device.

## Patentansprüche

1. Eine Netzwerkmanagementvorrichtung (1), aufweisend:
Eine Speichereinheit (1A), die konfiguriert ist, Netzwerkkonfigurationsdaten zu speichern und eine Störungseinheit (1 B),
wobei die Netzwerkkonfigurationsdaten (15), die durch die Speichereinheit gespeichert werden, einschließen:
Eine Gerätepositions-Informationstabelle (23), die konfiguriert ist, um für jede Kombination einer Kommunikationsvorrichtung, die ein Netzwerk ausbildet und einer Schicht, zu der die Kommunikationsvorrichtung gehört, einen Eintrag zu speichern, der gebildet wird durch eine Gruppe einschließend einen Geräteidentifizierer (25) als Identifikationsinformationen der Kommunikationsvorrichtung, Anzeige-Koordinatenwerte (26, 27) eines Icons der Kommunikationsvorrichtung in der Schicht, und einen Schichtwert (28), der die Schicht repräsentiert, zu der die Kommunikationsvorrichtung gehört; und
eine Sektions-Positionsinformationstabelle (212), die konfiguriert ist, um für jede Sektion als eine logische Verbindung in einer gleichen Schicht zwischen den Kommunikationsvorrichtungen einen Eintrag zu speichern, der gebildet wird durch eine Gruppe einschließend einen Sektionsidentifizierer (214) als Idenfikationsinformationen der Sektion, Anzeige-Koordinatenwerte (215, 216, 217, 218) von beiden Endpunkten eines Liniensegments, das die Sektion repräsentiert, und einen Schichtwert (219), der die Schicht repräsentiert, zu der die Sektion gehört, und
wobei eine Steuerungseinheit konfiguriert ist, um den Eintrag zu extrahieren einschließend eines spezifischen Schichtwerts von jeder der Gerätepositionsinformationstabelle und der Sektions-Positionsinformationstabelle der Netzwerkkonfigurationsdaten und zum Anzeigen eines Netzwerkkonfigurationsdiagramms in Übereinstimmung mit den Anzeige-Koordinatenwerten (26, 27) des Icons in dem Eintrag, die extrahiert wurden aus der Gerätepositions-Informationstabelle (23) und der Anzeige-Koordinatenwerte (215, 216, 217, 218) von beiden Endpunkten des Liniensegments in dem Eintrag, der extrahiert wurde von der Sektions-Positionsinformationstabelle (212).

2. Die Netzwerkmanagementvorrichtung (1) nach Anspruch 1, wobei die Netzwerkkonfigurationsdaten (15) ferner einschließen: Eine Geräteobjekttabelle, die konfiguriert ist, einen Eintrag zu speichern, der gebildet wird durch eine Gruppe einschließend dem Geräteidentifizierer und ein Attribut, für jede Kommunikationsvorrichtung, und eine Sektions-Objekttabelle (210), die konfiguriert ist, einen Eintrag zu speichern, der gebildet wird durch eine Gruppe einschließend den Sektionsidentifizierer und ein Attribut, für jede Sektion.

3. Die Netzwerkmanagementvorrichtung (1) nach Anspruch 1 oder 2, aufweisend eine Schicht-Filtereinheit (117), die konfiguriert ist, eine von einem Operator bestimmte Anzeigeschicht in einen Schichtwert (28) in Übereinstimmung mit einer vorher definierten Konversionsregel zu konvertieren.

4. Die Netzwerkmanagementvorrichtung (1) nach einem der Ansprüche 1 bis 3, wobei die Steuereinheit (1 B) konfiguriert ist, zu ermitteln, ob das Netzwerkkonfigurationsdiagramm in Übereinstimmung mit dem spezifischen Schichtwert angezeigt werden soll basierend auf Lizenzdaten (16), die eine anzeigbare Schicht für jeden Client bestimmen.

5. Die Netzwerkmanagementvorrichtung (1) nach einem der Ansprüche 1 bis 4, wobei die Steuereinheit (1 B) konfiguriert ist, um zu ermitteln, ob das Netzwerkkonfigurationsdiagramm in Übereinstimmung mit dem spezifischen Schichtwert angezeigt werden soll basierend auf Benutzerautoritätsdaten (1010), die eine anzeigbare Schicht für jeden Operator oder eine Operatorgruppe bestimmen.

6. Ein Anzeigeverfahren für ein Netzwerkkonfigurationsdiagramm, das ausgeführt wird durch eine Netzwerkmanagementvorrichtung, wobei die Netzwerkmanagementvorrichtung (1) einschließt:
Eine Speichereinheit, die konfiguriert ist, Netzwerkkonfigurationsdaten (15) zu speichern und eine Steuerungseinheit (1 B), und
wobei die Netzwerkkonfigurationsdaten (15) einschließen:
Eine Gerätepositions-Informationstabelle (23), die konfiguriert ist, um für jede Kombination einer Kommunikationsvorrichtung, die ein Netzwerk ausbildet und einer Schicht, zu der die Kommunikationsvorrichtung gehört, einen Eintrag zu speichern, der gebildet wird durch eine Gruppe einschließend einen Geräteidentifizierer (25) als Identifikationsinformationen der Kommunikationsvorrichtung, Anzeige-Koordinatenwerte (26, 27) eines Icons der Kommunikationsvorrichtung in der Schicht, und einen Schichtwert (28), der die Schicht repräsentiert, zu der die Kommunikationsvorrichtung gehört; und
eine Sektions-Positionsinformationstabelle (212), die konfiguriert ist, um für jede Sektion als eine logische Verbindung in einer gleichen Schicht zwischen den Kommunikationsvorrichtungen einen Eintrag zu speichern, der gebildet wird durch eine Gruppe einschließend einen Sektionsidentifizierer (214) als Idenfikationsinformationen der Sektion, Anzeige-Koordinatenwerte (215, 216, 217, 218) von beiden Endpunkten eines Liniensegments, das die Sektion repräsentiert, und einen Schichtwert (219), der die Schicht repräsentiert, zu der die Sektion gehört,
wobei das Anzeigeverfahren für ein Netzwerkkonfigurationsdiagramm aufweist:
Extrahieren eines Eintrags einschließend einen spezifischen Schichtwert von jeder der Gerätepositionsinformationstabelle (23) und der Sektionspositionsinformationstabelle (212) der Netzwerkkonfigurationsdaten und Anzeigen eines Netzwerkkonfigurationsdiagramms in Übereinstimmung mit den Anzeigekoordinatenwerten (26, 27) des Icons in dem Eintrag, der extrahiert wurde aus der Gerätepositionsinformationstabelle und den Anzeigekoordinatenwerten (215, 216, 217, 218) von beiden Endpunkten des Liniensegments in den Eintrag, der extrahiert wurde aus der Sektionspositionsinformationstabelle durch die Steuereinheit.

7. Ein Netzwerkmanagementsystem aufweisend eine Servervorrichtung (11) und eine Clientvorrichtung (111), die in der Lage sind, miteinander zu kommunizieren, wobei die Servervorrichtung einschließt:
Eine Speichereinheit für Netzwerkkonfigurationsdaten (15), die konfiguriert ist, Netzwerkkkonfigurationsdaten zu speichern;
eine Speichereinheit für Clientdaten, die konfiguriert ist, Lizenzdaten (16) von jeder Schicht zu speichern, die eine anzeigbare Schicht für jeden Client bestimmen;
eine Speichereinheit für Benutzerautoritätsdaten, die konfiguriert ist, um Benutzerautoritätsdaten (1010) zu speichern, die eine anzeigbare Schicht für jeden Operator oder eine Operatorgruppe bestimmen; und
eine Operationssteuereinheit (14),
wobei die Netzwerkkonfigurationsdaten, die durch die Netzwerkkonfigurationsdaten-Speicherungseinheit gespeichert werden, einschließen:
Eine Gerätepositionsinformationstabelle (23), die konfiguriert ist, um für jede Kombination einer Kommunikationsvorrichtung, die ein Netzwerk bildet, und einer Schicht, zu der die Kommunikationsvorrichtung gehört, einen Eintrag zu speichern, der gebildet wird durch eine Gruppe einschließend einen Geräteidentifizierer (25) als Identifikationsinformationen der Kommunikationsvorrichtung, Anzeige-Koordinatenwerte (26, 27) eines Icons der Kommunikationsvorrichtung in der Schicht, und einen Schichtwert (28), der die Schicht repräsentiert, zu der die Kommunikationsvorrichtung gehört; und
eine Sektions-Positionsinformationstabelle (212), die konfiguriert ist, um für jede Sektion als eine logische Verbindung in einer selben Schicht zwischen den Kommunikationsvorrichtungen einen Eintrag zu speichern, der gebildet wird durch eine Gruppe einschließend einem Sektionsidentifizierer (214) als Identifikationsinformationen der Sektion, Anzeige-Koordinatenwerte (215, 216, 217, 218) von beiden Endpunkten eines Liniensegments, das die Sektion repräsentiert, und einen Schichtwert (219), der die Schicht, zu der die Sektion gehört, repräsentiert;
wobei, wenn ein Operator der Clientvorrichtung sich einloggt, in der Operationssteuereinheit (14) ausgewählt werden von jeder Schicht, die unterschiedlich ist von einer Schicht, die nicht angezeigt werden kann mit den Benutzerautoritätsdaten (1010), die dem Operator entsprechen, aus den Lizenzdaten von jeder Schicht, die der Clientvorrichtung (111) entsprechen und die ausgewählten Lizenzdaten jeder Schicht als registrierte Lizenzdaten (115) jeder Schicht an die Clientvorrichtung geschickt werden, und auch Einträge ausgewählt werden, die einen selben Schichtwert haben wie eine Schicht, die angezeigt werden kann mit den registrierten Lizenzdaten aus den Einträgen der Gerätepositionsinformationstabelle (23) und der Sektions-Positionsinformationstabelle (212) der Netzwerkkonfigurationsdaten (15) und Netzwerkkonfigurations-Anzeigedaten (116), die durch die ausgewählten Einträge konfiguriert werden, an die Clientvorrichtung geschickt werden, und
wobei die Clientvorrichtung (111) einschließt:
Eine Speichervorrichtung; und
eine Operationssteuereinheit (114), die konfiguriert ist, um die registrierten Lizenzdaten und die Netzwerkkonfigurations-Anzeigedaten (116), die von der Servervorrichtung (11) empfangen werden, in der Speichervorrichtung zu speichern, und wenn eine Schicht, die angezeigt werden soll, durch den Operator ausgewählt wird, zu ermitteln, ob Lizenzdaten der ausgewählten Schicht existieren in den registrierten Lizenzdaten, die durch die Speichereinrichtung gespeichert werden, und im Fall, dass die Lizenzdaten der ausgewählten Schicht existieren, Extrahieren eines Eintrags einschließend eines Schichtwerts (28), der der Schicht, die angezeigt werden soll, entspricht, aus den Einträgen der Gerätepositionsinformationstabelle (23) und der Sektions-Positionsinformationstabelle (212), die die Netzwerkkonfigurations-Anzeigedaten konfigurieren und durch die Speichervorrichtung gespeichert werden, und Anzeigen eines Netzwerkkonfigurationsdiagramms in Übereinstimmung mit den Anzeige-Koordinatenwerten (26, 27) des Icons in dem Eintrag, der extrahiert wird aus der Gerätepositionsinformationstabelle und den Anzeige-Koordinatenwerten (215, 216, 217, 218) von beiden der Endpunkte des Liniensegments in dem Eintrag, der extrahiert wird aus der Sektionspositionsinformationstabelle.

8. Eine Servervorrichtung, aufweisend:
Eine Speicherungseinheit (1A) für Netzwerkkonfigurationsdaten, die konfiguriert ist, Netzwerkkonfigurationsdaten (15) zu speichern,
eine Speicherungseinheit für Clientdaten, die konfiguriert ist, Lizenzdaten (16) zu speichern, die an eine anzeigbare Schicht für jeden Client bestimmen;
eine Speichereinheit für Benutzerautoritätsdaten, die konfiguriert ist, Benutzerautoritätsdaten (1010) zu speichern, die eine anzeigbare Schicht für jeden Operator oder eine Operatorgruppe bestimmten; und
eine Operationssteuereinheit (14),
wobei die Netzwerkkonfigurationsdaten, die gespeichert werden durch die Speichereinheit für Netzwerkkonfigurationsdaten einschließen:
Eine Gerätepositionsinformationstabelle (23), die konfiguriert ist, für jede Kombination von einer Kommunikationsvorrichtung, die ein Netzwerk bildet, und einer Schicht, zu der die Kommunikationsvorrichtung gehört, einen Eintrag zu speichern, der gebildet wird durch eine Gruppe einschließend einen Geräteidentifizierer (25) als Identifikationsinformationen der Kommunikationsvorrichtung, Anzeige-Koordinatenwerte (26, 27) eines Icons der Kommunikationsvorrichtung in der Schicht, und einen Schichtwert (28), der die Schicht repräsentiert, zu der die Kommunikationsvorrichtung gehört; und
eine Sektions-Positionsinformationstabelle (212), die konfiguriert ist, um für jede Sektion als eine logische Verbindung in der selben Schicht zwischen den Kommunikationsvorrichtungen einen Eintrag zu speichern, der gebildet wird durch eine Gruppe einschließend einen Sektionsidentifizierer (214) als Identifikationsinformationen der Sektion, Anzeige-Koordinatenwerte (215, 216, 217, 218) von beiden Endpunkten eines Liniensegments, das die Sektion repräsentiert, und einen Schichtwert (219), der die Schicht repräsentiert, zu der die Sektion gehört, und
wobei, wenn ein Operator der Clientvorrichtung sich einloggt, die Operationssteuereinheit (14) Lizenzdaten (16) auswählt für jede Schicht, die anders ist als die Schicht, die nicht angezeigt werden kann mit dem Benutzerautoritätsdaten (1010), die dem Operator entsprechen, aus den Lizenzdaten jeder Schicht, die der Clientvorrichtung entsprechend, und die ausgewählten Lizenzdaten jeder Schicht als registrierte Lizenzdaten von jeder Schicht an die Clientvorrichtung schickt, und auch Einträge auswählt, die einen gleichen Schichtwert haben wie eine Schicht, die angezeigt werden kann, mit den registrierten Lizenzdaten aus den Einträgen der Gerätepositionsinformationstabelle (23) und der Sektions-Positionsinformationstabelle (212) der Netzwerkkonfigurationsdaten (15), und Netzwerkkonfigurations-Anzeigedaten an die Clientvorrichtung sendet, die konfiguriert werden durch die ausgewählten Einträge.

9. Ein Computerprogrammprodukt aufweisend computerimplementierbare Instruktionen, um eine programmierbare Computervorrichtung zu veranlassen, alle Schritte des Verfahrens nach Anspruch 6 auszuführen, wenn das Computerprogramm auf der programmierbaren Computervorrichtung ausgeführt wird.

## Revendications

1. Dispositif de gestion de réseau (1), comprenant :
une unité de stockage (1A) configurée pour stocker des données de configuration de réseau et une unité de commande (1B),
dans lequel les données de configuration de réseau (15) stockées par l'unité de stockage incluent :
une table d'informations de position de dispositif (23) configurée, pour chaque combinaison d'un dispositif de communication constituant un réseau et d'une couche à laquelle le dispositif de communication appartient, pour stocker une entrée formée par un groupe incluant un identifiant de dispositif (25) en tant qu'informations d'identification du dispositif de communication, des valeurs de coordonnées d'affichage (26, 27) d'une icône du dispositif de communication dans la couche, et une valeur de couche (28) représentant la couche à laquelle le dispositif de communication appartient ; et
une table d'informations de position de section (212) configurée, pour chaque section en tant que connexion logique dans une même couche entre les dispositifs de communication, pour stocker une entrée formée par un groupe incluant un identifiant de section (214) en tant qu'informations d'identification de la section, des valeurs de coordonnées d'affichage (215, 216, 217, 218) des deux points d'extrémité d'un segment de droite représentant la section, et une valeur de couche (219) représentant la couche à laquelle la section appartient ; et
dans lequel l'unité de commande est configurée pour extraire l'entrée incluant une valeur de couche spécifique de chacune de la table d'informations de position de dispositif et de la table d'informations de position de section des données de configuration de réseau, et afficher un diagramme de configuration de réseau en conformité avec les valeurs de coordonnées d'affichage (26, 27) de l'icône dans l'entrée extraite de la table d'informations de position de dispositif (23) et les valeurs de coordonnées d'affichage (215, 216, 217, 218) des deux points d'extrémité du segment de droite dans l'entrée extraite de la table d'informations de position de section (212).

2. Dispositif de gestion de réseau (1) selon la revendication 1, dans lequel les données de configuration de réseau (15) incluent en outre : une table d'objet de dispositif configurée pour stocker une entrée formée par un groupe incluant l'identifiant de dispositif et un attribut, pour chaque dispositif de communication ; et une table d'objet de section (210) configurée pour stocker une entrée formée par un groupe incluant l'identifiant de section et un attribut, pour chaque section.

3. Dispositif de gestion de réseau (1) selon la revendication 1 ou 2, comprenant une unité de filtrage de couche (117) configurée pour convertir une couche d'affichage désignée par un opérateur en la valeur de couche (28) en conformité avec une règle de conversion préalablement définie.

4. Dispositif de gestion de réseau (1) selon l'une quelconque des revendications 1 à 3, dans lequel l'unité de commande (1B) est configurée pour déterminer s'il faut afficher le diagramme de configuration de réseau selon la valeur de couche spécifique, en se basant sur des données de licence (16) qui établissent une couche affichable pour chaque client.

5. Dispositif de gestion de réseau (1) selon l'une quelconque des revendications 1 à 4, dans lequel l'unité de commande (1B) est configurée pour déterminer s'il faut afficher le diagramme de configuration de réseau selon la valeur de couche spécifique, en se basant sur des données de droits d'usage (1010) qui établissent une couche affichable pour chaque opérateur ou groupe d'opérateurs.

6. Procédé d'affichage de diagramme de configuration de réseau exécuté par un dispositif de gestion de réseau,
dans lequel le dispositif de gestion de réseau (1) inclut :
une unité de stockage (1A) configurée pour stocker des données de configuration de réseau (15) et une unité de commande (1B), et
dans lequel les données de configuration de réseau (15) incluent :
une table d'informations de position de dispositif (23) configurée, pour chaque combinaison d'un dispositif de communication constituant un réseau et d'une couche à laquelle le dispositif de communication appartient, pour stocker une entrée formée par un groupe incluant un identifiant de dispositif (25) en tant qu'informations d'identification du dispositif de communication, des valeurs de coordonnées d'affichage (26, 27) d'une icône du dispositif de communication dans la couche, et une valeur de couche (28) représentant la couche à laquelle le dispositif de communication appartient ; et
une table d'informations de position de section (212) configurée, pour chaque section en tant que connexion logique dans une même couche entre les dispositifs de communication, pour stocker une entrée formée par un groupe incluant un identifiant de section (214) en tant qu'informations d'identification de la section, des valeurs de coordonnées d'affichage (215, 216, 217, 218) des deux points d'extrémité d'un segment de droite représentant la section, et une valeur de couche (219) représentant la couche à laquelle la section appartient ;
le procédé d'affichage de diagramme de configuration de réseau, comprenant :
l'extraction d'une entrée incluant une valeur de couche spécifique de chacune de la table d'informations de position de dispositif (23) et de la table d'informations de position de section (212) des données de configuration de réseau, et l'affichage d'un diagramme de configuration de réseau en conformité avec les valeurs de coordonnées d'affichage (26, 27) de l'icône dans l'entrée extraite de la table d'informations de position de dispositif et les valeurs de coordonnées d'affichage (215, 216, 217, 218) des deux points d'extrémité du segment de droite dans l'entrée extraite de la table d'informations de position de section, par l'unité de commande.

7. Système de gestion de réseau comprenant un dispositif serveur (11) et un dispositif client (111) capables de communiquer l'un avec l'autre,
dans lequel le dispositif serveur inclut :
une unité de stockage de données de configuration de réseau (15) configurée pour stocker des données de configuration de réseau ;
une unité de stockage de données client configurée pour stocker des données de licence (16) de chaque couche qui établissent une couche affichable pour chaque client ;
une unité de stockage de données de droits d'usage configurée pour stocker des données de droits d'usage (1010) qui établissent une couche affichable pour chaque opérateur ou groupe d'opérateurs ; et
une unité de commande d'opération (14),
dans lequel les données de configuration de réseau stockées par l'unité de stockage de données de configuration de réseau incluent :
une table d'informations de position de dispositif (23) configurée, pour chaque combinaison d'un dispositif de communication constituant un réseau et d'une couche à laquelle le dispositif de communication appartient, pour stocker une entrée formée par un groupe incluant un identifiant de dispositif (25) en tant qu'informations d'identification du dispositif de communication, des valeurs de coordonnées d'affichage (26, 27) d'une icône du dispositif de communication dans la couche, et une valeur de couche (28) représentant la couche à laquelle le dispositif de communication appartient ; et
une table d'informations de position de section (212) configurée, pour chaque section en tant que connexion logique dans une même couche entre les dispositifs de communication, pour stocker une entrée formée par un groupe incluant un identifiant de section (214) en tant qu'informations d'identification de la section, des valeurs de coordonnées d'affichage (215, 216, 217, 218) des deux points d'extrémité d'un segment de droite représentant la section, et une valeur de couche (219) représentant la couche à laquelle la section appartient ;
dans lequel, lorsqu'un opérateur du dispositif client ouvre une session, l'unité de commande d'opération (14) sélectionne des données de licence (16) de chaque couche autre qu'une couche qui ne peut pas être affichée avec les données de droits d'usage (1010) correspondant à l'opérateur parmi les données de licence de chaque couche correspondant au dispositif client (111) et envoie les données de licence sélectionnées de chaque couche en tant que données de licence enregistrées (115) de chaque couche au dispositif client, et sélectionne également des entrées ayant une même valeur de couche qu'une couche qui peut être affichée avec les données de licence enregistrées parmi les entrées de la table d'informations de position de dispositif (23) et de la table d'informations de position de section (212) des données de configuration de réseau (15) et envoie des données d'affichage de configuration de réseau (116) configurées par les entrées sélectionnées au dispositif client, et
dans lequel le dispositif client (111) inclut :
un dispositif de stockage ; et
une unité de commande d'opération (114) configurée pour : stocker les données de licence enregistrées (115) et les données d'affichage de configuration de réseau (116) reçues du dispositif serveur (11) dans le dispositif de stockage ; et lorsqu'une couche à afficher est sélectionnée par l'opérateur, déterminer si des données de licence de la couche sélectionnée existent dans les données de licence enregistrées stockées par le dispositif de stockage et, dans un cas où les données de licence de la couche sélectionnée existent, extraire une entrée incluant une valeur de couche (28) correspondant à la couche à afficher parmi les entrées de la table d'informations de position de dispositif (23) et la table d'informations de position de section (212) configurant les données d'affichage de configuration de réseau stockées par le dispositif de stockage, et afficher un diagramme de configuration de réseau en conformité avec les valeurs de coordonnées d'affichage (26, 27) de l'icône dans l'entrée extraite de la table d'informations de position de dispositif et les valeurs de coordonnées d'affichage (215, 216, 217, 218) des deux points d'extrémité du segment de droite dans l'entrée extraite de la table d'informations de position de section.

8. Dispositif serveur, comprenant :
une unité de stockage de données de configuration de réseau (1A) configurée pour stocker des données de configuration de réseau (15) ;
une unité de stockage de données client configurée pour stocker des données de licence (16) qui établissent une couche affichable pour chaque client ;
une unité de stockage de données de droits d'usage configurée pour stocker des données de droits d'usage (1010) qui établissent une couche affichable pour chaque opérateur ou groupe d'opérateurs ; et
une unité de commande d'opération (14),
dans lequel les données de configuration de réseau stockées par l'unité de stockage de données de configuration de réseau incluent :
une table d'informations de position de dispositif (23) configurée, pour chaque combinaison d'un dispositif de communication constituant un réseau et d'une couche à laquelle le dispositif de communication appartient, pour stocker une entrée formée par un groupe incluant un identifiant de dispositif (25) en tant qu'informations d'identification du dispositif de communication, des valeurs de coordonnées d'affichage (26, 27) d'une icône du dispositif de communication dans la couche, et une valeur de couche (28) représentant la couche à laquelle le dispositif de communication appartient ; et
une table d'informations de position de section (212) configurée, pour chaque section en tant que connexion logique dans une même couche entre les dispositifs de communication, pour stocker une entrée formée par un groupe incluant un identifiant de section (214) en tant qu'informations d'identification de la section, des valeurs de coordonnées d'affichage (215, 216, 217, 218) des deux points d'extrémité d'un segment de droite représentant la section, et une valeur de couche (219) représentant la couche à laquelle la section appartient ; et
dans lequel, lorsqu'un opérateur du dispositif client ouvre une session, l'unité de commande d'opération (14) sélectionne des données de licence (16) de chaque couche autre qu'une couche qui ne peut pas être affichée avec les données de droits d'usage (1010) correspondant à l'opérateur parmi les données de licence de chaque couche correspondant au dispositif client et envoie les données de licence sélectionnées de chaque couche en tant que données de licence enregistrées de chaque couche au dispositif client, et sélectionne également des entrées ayant une même valeur de couche qu'une couche qui peut être affichée avec les données de licence enregistrées parmi les entrées de la table d'informations de position de dispositif (23) et la table d'informations de position de section (212) des données de configuration de réseau (15) et envoie des données d'affichage de configuration de réseau configurées par les entrées sélectionnées au dispositif client.

9. Produit de programme informatique comprenant des instructions pouvant être implémentées par ordinateur pour amener un dispositif informatique programmable à réaliser toutes les étapes du procédé de la revendication 6 lorsque le programme informatique est exécuté sur le dispositif informatique programmable.
